# EUROPEAN PATENT SPECIFICATION

(11) **EP 3 257 958 B1**
(45) Date of publication and mention of the grant of the patent: **15.04.2020**
(21) Application number: 15881891.4
(22) Date of filing: 13.02.2015
(51) Int. Cl.: C22C 38/00, C21D 8/12, C22C 38/60, H01F 1/16, C21D 9/46, C22C 38/02, C22C 38/04, C22C 38/06, C22C 38/08, C22C 38/12, C22C 38/16, C22C 38/34, C21D 6/00

(54) **GRAIN-ORIENTED ELECTRICAL STEEL SHEET AND METHOD FOR PRODUCING SAME**
KORNORIENTIERTES ELEKTROSTAHLBLECH UND VERFAHREN ZUR HERSTELLUNG DAVON
TÔLE D'ACIER ÉLECTRIQUE À GRAINS ORIENTÉS ET SON PROCÉDÉ DE FABRICATION

(43) Date of publication of application: 20.12.2017
(73) Proprietor: JFE Steel Corporation, Tokyo 100-0011 (JP)
(72) Inventor: HAYAKAWA, Yasuyuki, Tokyo 100-0011 (JP); SENDA, Kunihiro, Tokyo 100-0011 (JP); TERASHIMA, Takashi, Tokyo 100-0011 (JP)
(74) Representative: Haseltine Lake Kempner LLP
(86) International application number: PCT/JP2015/000685
(87) International publication number: WO 2016/129015

(56) References cited:
- JP-A- H05 320 769
- JP-A- H06 158 167
- JP-A- H06 220 540
- JP-A- 2000 256 810
- JP-A- 2002 241 906
- JP-A- 2003 034 820
- JP-A- 2007 239 009
- JP-A- 2011 074 453
- JP-A- 2014 095 129
- JP-A- 2014 196 558

## Description

### TECHNICAL FIELD

The disclosure relates to a grain-oriented electrical steel sheet having excellent iron loss property and a method for producing the grain-oriented electrical steel sheet, and is particularly intended to obtain a grain-oriented electrical steel sheet having excellent magnetic property at low cost.

### BACKGROUND

A grain-oriented electrical steel sheet is a soft magnetic material used as an iron core material of a transformer or generator, and has crystal texture in which <001> orientation which is the easy magnetization axis of iron is highly accumulated into the rolling direction of the steel sheet. Such texture is formed through secondary recrystallization of preferentially causing the growth of giant crystal grains in (110)[001] orientation which is called Goss orientation, when secondary recrystallization annealing is performed in the process of producing the grain-oriented electrical steel sheet.

A conventional process of producing such a grain-oriented electrical steel sheet is as follows.

A slab containing about 4.5 mass% or less Si and an inhibitor component such as MnS, MnSe, and AlN is heated to 1300 °C or more to dissolve the inhibitor component. The slab is then hot rolled, and optionally hot band annealed. The hot rolled sheet is then cold rolled once, or twice or more with intermediate annealing therebetween, to final sheet thickness. The cold rolled sheet is then subjected to primary recrystallization annealing in a wet hydrogen atmosphere, to perform primary recrystallization and decarburization. After this, an annealing separator having magnesia (MgO) as a main ingredient is applied to the primary recrystallization annealed sheet, and then final annealing is performed at 1200 °C for about 5 h to develop secondary recrystallization and purify the inhibitor component (for example, the specification of US 1965559 A (PTL 1), JP S40-15644 B2 (PTL 2), JP S51-13469 B2 (PTL 3) and JP 2014 196558 A1 (PTL6)).

### CITATION LIST

### Patent Literatures

PTL 1: US 1965559 A
PTL 2: JP S40-15644 B2
PTL 3: JP S51-13469 B2
PTL 4: JP 2000-129356 A
PTL 5: JP 2004-353036 A
PTL 6: JP 2014 196558 A1
PTL 7: JP 2007 239009 A

### SUMMARY

### (Technical Problem)

As described above, the grain-oriented electrical steel sheet is conventionally manufactured by the process of containing a precipitate (inhibitor component) such as MnS, MnSe, and AlN in the slab stage, heating the slab at a high temperature exceeding 1300 °C to dissolve the inhibitor component, and causing fine precipitation in the subsequent step to develop secondary recrystallization. Thus, high-temperature slab heating exceeding 1300 °C is necessary in the conventional grain-oriented electrical steel sheet manufacturing process, which requires very high manufacturing cost. The conventional process therefore has a problem of being unable to meet the recent demands to reduce manufacturing costs.

To solve this problem, a technique (inhibitorless method) for enabling secondary recrystallization without containing any inhibitor component was developed in JP 2000-129356 A (PTL 4). This method involves a completely different technical idea from that of the conventional grain-oriented electrical steel sheet producing method.

In detail, while the conventional grain-oriented electrical steel sheet producing method develops secondary recrystallization using a precipitate (inhibitor) such as MnS, AlN, and MnSe, the inhibitorless method develops secondary recrystallization by texture (texture control) through high purification without using such an inhibitor. The inhibitorless method does not require high-temperature slab heating and high-temperature and long-duration secondary recrystallization annealing, and so enables the manufacture of the grain-oriented electrical steel sheet at low cost. An example of an inhibitorless grain-oriented steel sheet is disclosed in PTL 7: JP 2007 239009 A (PTL 7).

However, the inhibitorless method cannot necessarily achieve sufficient magnetic property and stability, although it is advantageous in that the grain-oriented electrical steel sheet can be manufactured at low cost.

To solve this problem, we further studied the technique of developing secondary recrystallization without containing any inhibitor component in the slab. As a result, we developed and proposed a technique (sulfurization method) that can stably develop secondary recrystallization by increasing the amount of S in the steel substrate after the primary recrystallization annealing and before the completion of secondary recrystallization, even in the case where no inhibitor component is contained in the slab (JP 2004-353036 A (PTL 5)).

By increasing the amount of S in the steel substrate using the sulfurization method, the amount of S segregating to grain boundaries increases, as a result of which the movement of grain boundaries surrounding orientations other than the Goss orientation is further suppressed. This stabilizes secondary recrystallization, and enhances the sharpness of secondary grains to the Goss orientation, with it being possible to improve magnetic property.

However, there is a problem in that the addition of a large amount of sulfurization agent causes excessive oxidation reaction during the secondary recrystallization annealing, and leads to the formation of a base film defective part called sparkle or frost.

As is well known, grain-oriented electrical steel sheets are mainly used as transformer iron cores. Transformers are broadly classified into stacked iron core transformers and wound iron core transformers, depending on their iron core structures.

A stacked iron core transformer has an iron core formed by stacking steel sheets cut to a desired shape. A wound iron core transformer has an iron core formed by winding a steel strip slit to a desired width. As large-capacity transformers, stacked iron core transformers are used exclusively.

An important property required of transformers is transformer core loss. Transformer core loss is energy loss when a transformer iron core is excited. Higher transformer core loss leads to higher power loss, and so transformer core loss needs to be as low as possible.

However, iron loss can degrade as a result of processing a steel sheet into a transformer.

For example, there are instances where low iron loss cannot be maintained when pinch rolls for conveying the steel sheet or measuring rolls for measuring the length of the steel sheet are pressed against the steel sheet. In such instances, even when a transformer is formed using a steel sheet whose iron loss is lowered by a magnetic domain refining effect such as a linear flaw, its iron loss value may not be as low as expected. Particularly in the case of using the steel sheet for a stacked iron core transformer, stress relief annealing is not performed after processing the steel sheet into the iron core, and so problems such as degraded iron loss and increased noise can arise.

The conventional technique of adding a sulfurization agent has difficulty in forming the base film, and therefore has a problem in that the influence of strain associated with processing into a transformer is significant and transformer core loss degrades.

It could be helpful to propose a grain-oriented electrical steel sheet that has excellent magnetic property and can be produced at low cost with no need for high-temperature slab heating and whose transformer core loss is effectively improved by reducing the influence of strain associated with processing into a transformer, and an advantageous method for producing the grain-oriented electrical steel sheet.

### (Solution to Problem)

We closely examined the technique of developing secondary recrystallization without containing any inhibitor component in a slab and improving magnetic property by sulfurization treatment.

As a result, we developed a technique that can stably realize favorable base film formation by optimizing material components even in the case where sulfurization treatment is performed.

The following describes the experimental results that led to the disclosure. In the following description, "%" with regard to components denotes mass% unless otherwise stated.

### Experiment 1

A silicon steel slab containing, in mass%, Si: 3.3%, C: 0.03%, Mn: 0.07%, S: 0.002%, Al: 0.006%, and N: 0.003% and further containing P and Sb in the ranges of P: 0% to 0.2% and Sb: 0% to 0.2% was heated at 1220 °C for 30 minutes, and then hot rolled to obtain a hot rolled sheet of 2.5 mm in thickness. The hot rolled sheet was hot band annealed at 1025 °C for 1 minute, and then cold rolled to final sheet thickness.

Following this, the cold rolled sheet was primary recrystallization annealed, and then an annealing separator having MgO as a main ingredient and containing 10% magnesium sulfate was applied at 12.5 g/m² to the primary recrystallized sheet and dried. The primary recrystallized sheet was then secondary recrystallization annealed under the following condition: heating rate: 15 °C/h, atmosphere gas: N₂ gas up to 900 °C, and H₂ gas at 900 °C or more, and soaking treatment: 1160 °C for 5 h.

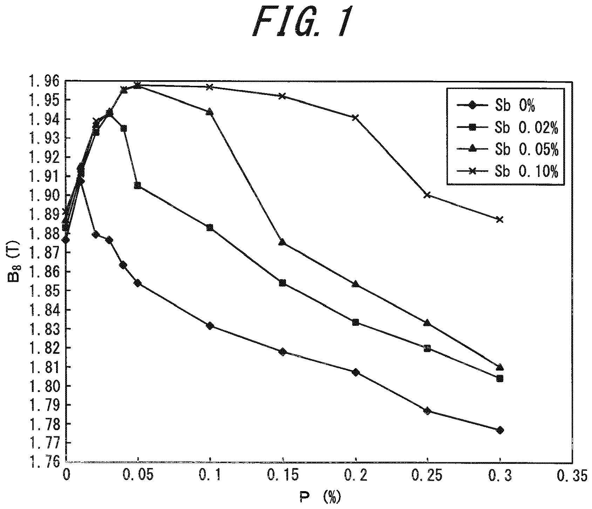

FIG. 1 illustrates the result of studying the relationship between the additive amount of P, the additive amount of Sb, and the magnetic flux density.

As illustrated in FIG. 1, in the case of adding P singly, the magnetic flux density improving effect was poor, and rather the magnetic flux density tended to degrade by the addition of P. In the case of adding Sb, the magnetic flux density increased with the addition of P until the additive amount of P reached the additive amount of Sb, and gradually decreased once the additive amount of P exceeded the additive amount of Sb. This demonstrates that the magnetic flux density improving effect by the addition of P is achieved by adding Sb up to about the same amount as P.

Although the effect of adding P and Sb in combination is not clear, we assume the following:
P is a grain boundary segregation element, and has a function of suppressing recrystallization nucleation from the grain boundaries and facilitating recrystallization nucleation from inside the grains to increase the Goss orientation in the primary recrystallized texture. P thus has an effect of stabilizing secondary recrystallization nucleation and improving magnetic property. However, the addition of P has an adverse effect of facilitating surface oxidation during the secondary recrystallization annealing and hindering the sulfurization effect and also hindering normal base film formation.

Sb is a surface segregation element, and has a function of suppressing oxidation during the secondary recrystallization annealing to optimize the oxidation quantity and stabilize secondary recrystallization and base film formation. Sb thus has an effect of lessening the adverse effect of the addition of P.

Accordingly, adding Sb and P in combination is very effective in achieving the aforementioned texture improving effect by the addition of P.

The phenomenon of improving magnetic property by sulfurization is specific to the case where the steel slab contains no inhibitor component. In the case where there is no inhibitor (precipitate) such as AlN and MnS in the steel, the grain boundaries surrounding the Goss-oriented grains in the primary recrystallized texture have higher mobility than the grain boundaries surrounding the grains in the other orientations, as a result of which the Goss orientation undergoes preferential growth (secondary recrystallization).

Although the reason why magnetic property is improved by increasing the amount of S in the steel substrate after primary recrystallization is not clear, we assume the following:
When the amount of S in the steel substrate is increased, the amount of S segregating to grain boundaries increases, as a result of which the movement of the grain boundaries surrounding the orientations other than the Goss orientation is further suppressed. This stabilizes secondary recrystallization, and enhances the sharpness of secondary grains to the Goss orientation. The coexistence of P and S which are elements having a strong tendency to segregate to grain boundaries further enhances the magnetic property improving effect.

Moreover, regarding the method of reducing the influence of strain associated with processing into a transformer, we studied the condition of the flattening annealing atmosphere, and discovered that the magnetic property in the rolling transverse direction (the direction orthogonal to the rolling direction) changes, and there is a very high correlation between the magnetic property in the transverse direction and the influence of strain associated with processing into a transformer.

We then discovered a preferable range of the magnetic property in the transverse direction effective in reducing the influence of strain, as described below.

### Experiment 2

A silicon steel slab containing, in mass%, Si: 3.3%, C: 0.03%, Mn: 0.07%, S: 0.002%, Al: 0.006%, N: 0.003%, P: 0.05%, and Sb: 0.05% was heated at 1220 °C for 30 minutes, and then hot rolled to obtain a hot rolled sheet of 2.5 mm in thickness. The hot rolled sheet was hot band annealed at 1025 °C for 1 minute, and then cold rolled to final sheet thickness.

Following this, the cold rolled sheet was primary recrystallization annealed, and then an annealing separator having MgO as a main ingredient and containing 10% magnesium sulfate was applied at 12.5 g/m² to the primary recrystallized sheet and dried. The primary recrystallized sheet was then secondary recrystallization annealed under the following condition: heating rate: 15 °C/h, atmosphere gas: N₂ gas up to 900 °C, and H₂ gas at 900 °C or more, and soaking treatment: 1160 °C for 5 h.

Further, an insulating coating mainly composed of colloidal silica and magnesium phosphate was applied. An experiment of changing the soaking temperature (soaking time of 10 s) and the H₂ partial pressure (the rest being N₂ atmosphere) in the annealing atmosphere in flattening annealing was then conducted under the conditions shown in Table 1.

The magnetic property of the obtained product in each of the rolling direction and the transverse direction was measured. In the rolling direction, the iron loss (W_{17/50}) when exciting the product to 1.7 T at 50 Hz was measured. In the transverse direction, the magnetizing force (TD-H₁₀) and iron loss (TD-W₁₀) when exciting the product to 1.0 T at 50 Hz were measured. Strain sensitivity was evaluated based on the change (ΔW) in iron loss W_{17/50} value when passing the sheet while pressing it by measuring rolls, which were made up of steel rolls of 100 mm in diameter and 50 mm in width, with a rolling reduction force of 1.5 MPa (15 kgf/cm).

Table 1 shows the obtained results.

### [Table 1]

**Table 1**

| No. | Annealing temperature (°C) | H₂ partial pressure (%) | TD-H₁₀ (A/m) | TD-W₁₀ (W/kg) | W_{17/50} (W/kg) | ΔW (W/kg) |
|---|---|---|---|---|---|---|
| 1 | 780 | 0.5 | 172 | 1.01 | 0.945 | 0.055 |
| 2 | 790 | 0.5 | 180 | 1.05 | 0.935 | 0.035 |
| 3 | 800 | 0.5 | 192 | 1.11 | 0.912 | 0.018 |
| 4 | 810 | 0.5 | 202 | 1.17 | 0.900 | 0.006 |
| 5 | 820 | 0.5 | 240 | 1.33 | 0.892 | 0.003 |
| 6 | 830 | 0.5 | 253 | 1.63 | 0.882 | 0.003 |
| 7 | 840 | 0.5 | 255 | 1.72 | 0.874 | 0.004 |
| 8 | 850 | 0.5 | 260 | 1.95 | 0.871 | 0.003 |
| 9 | 860 | 0.5 | 258 | 1.98 | 0.875 | 0.002 |
| 10 | 850 | 0 | 156 | 1.94 | 0.883 | 0.102 |
| 11 | 850 | 0.1 | 191 | 1.93 | 0.880 | 0.020 |
| 12 | 850 | 0.2 | 222 | 1.96 | 0.873 | 0.005 |
| 13 | 850 | 0.5 | 260 | 1.95 | 0.871 | 0.001 |
| 14 | 850 | 1 | 258 | 1.93 | 0.874 | 0.003 |
| 15 | 850 | 3 | 256 | 1.95 | 0.871 | 0.002 |
| 16 | 850 | 5 | 265 | 1.94 | 0.868 | 0.001 |
| 17 | 850 | 10 | 260 | 1.94 | 0.873 | 0.003 |

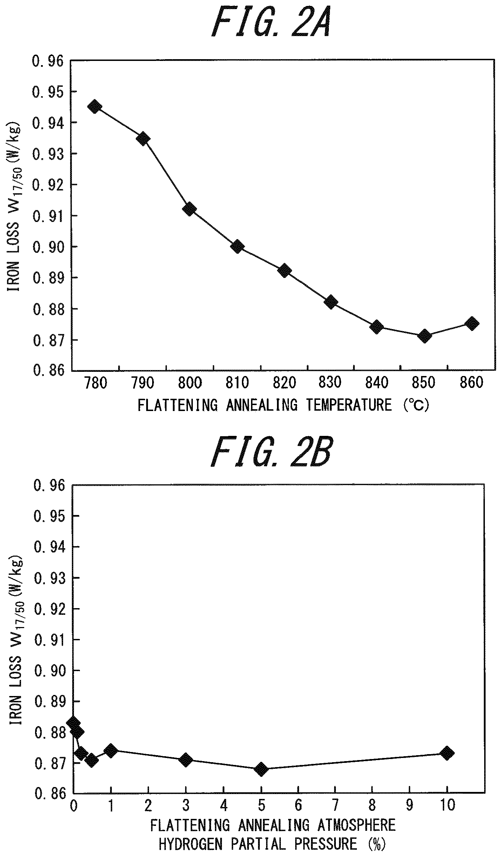

FIGS. 2A and 2B summarize the influence of the flattening annealing temperature on the iron loss (W_{17/50}) in the rolling direction and the influence of the H₂ partial pressure in the annealing atmosphere on the iron loss (W_{17/50}) in the rolling direction.

As illustrated in FIGS. 2A and 2B, the flattening annealing temperature significantly influences the iron loss (W_{17/50}) in the rolling direction, and needs to be 830 °C or more to improve the iron loss. Meanwhile, the H₂ partial pressure in the flattening annealing atmosphere hardly influences the iron loss (W_{17/50}).

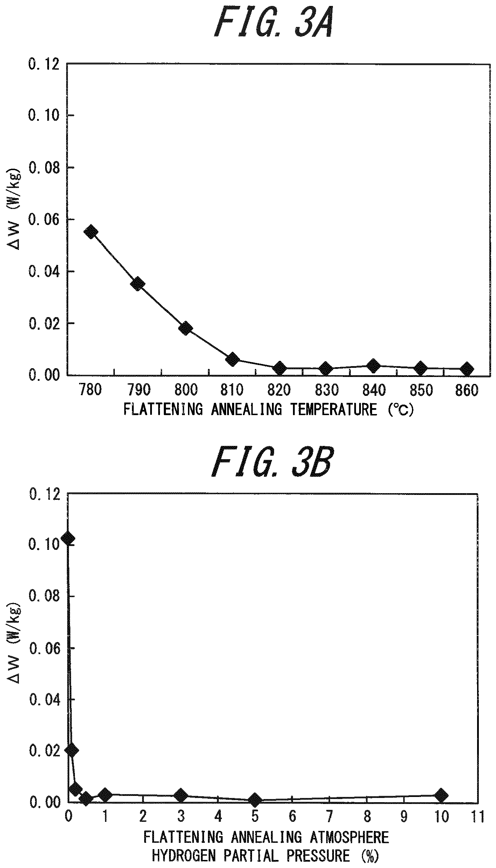

FIGS. 3A and 3B summarize the influence of the flattening annealing temperature on the iron loss degradation (ΔW) upon measuring roll rolling reduction and the influence of the H₂ partial pressure in the annealing atmosphere on the iron loss degradation (ΔW) upon measuring roll rolling reduction.

As illustrated in FIGS. 3A and 3B, the flattening annealing temperature significantly influences the iron loss degradation (ΔW) upon measuring roll rolling reduction, and needs to be 820 °C or more to reduce the iron loss degradation. The H₂ partial pressure in the flattening annealing atmosphere also significantly influences the iron loss degradation (ΔW), and the iron loss degradation (ΔW) upon measuring roll rolling reduction is very high in the case where the hydrogen atmosphere is not introduced.

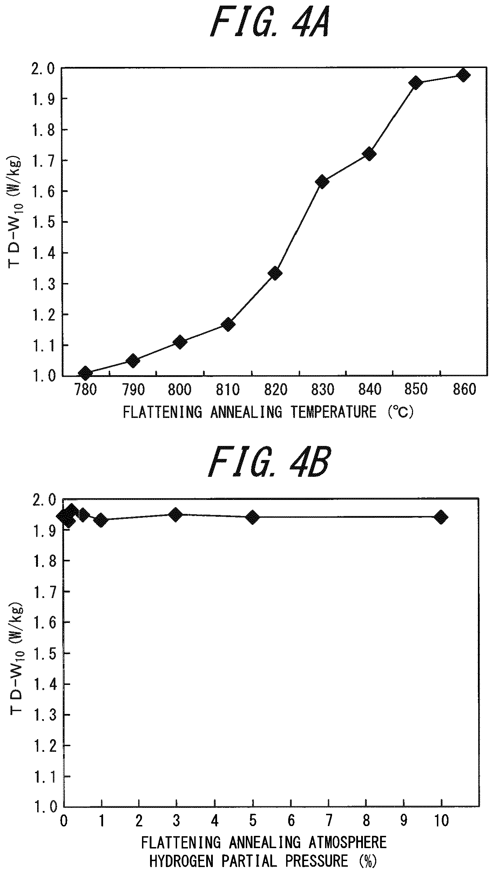

FIGS. 4A and 4B summarize the influence of the flattening annealing temperature on the iron loss (TD-W₁₀) in the transverse direction and the influence of the H₂ partial pressure in the annealing atmosphere on the iron loss (TD-W₁₀) in the transverse direction.

As illustrated in FIGS. 4A and 4B, the flattening annealing temperature significantly influences the iron loss (TD-W₁₀) in the transverse direction, and a higher flattening annealing temperature increases the iron loss (TD-W₁₀) in the transverse direction. Meanwhile, the H₂ partial pressure in the flattening annealing atmosphere hardly influences the iron loss (TD-W₁₀) in the transverse direction.

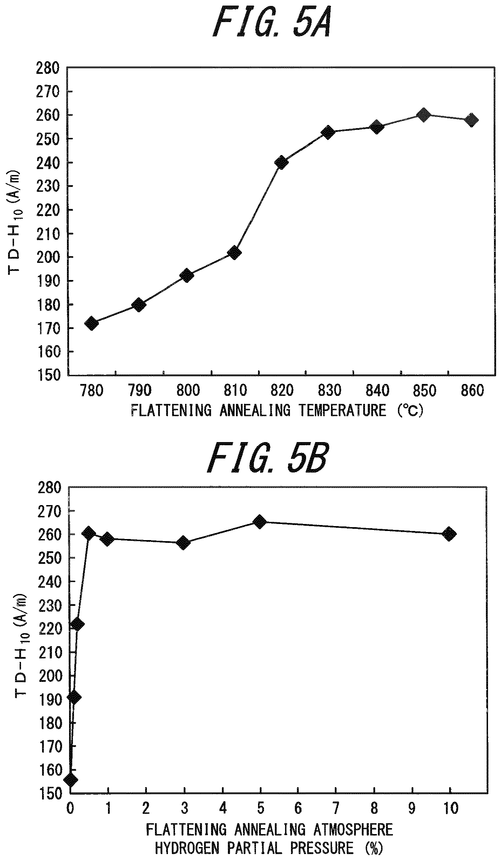

FIGS. 5A and 5B summarize the influence of the flattening annealing temperature on the magnetizing force (TD-H₁₀) in the transverse direction and the influence of the H₂ partial pressure in the annealing atmosphere on the magnetizing force (TD-H₁₀) in the transverse direction.

As illustrated in FIGS. 5A and 5B, the flattening annealing temperature significantly influences the magnetizing force (TD-H₁₀) in the transverse direction, and a higher flattening annealing temperature increases the magnetizing force (TD-H₁₀) in the transverse direction. The hydrogen atmosphere also significantly influences the magnetizing force (TD-H₁₀) in the transverse direction, and the magnetizing force (TD-H₁₀) in the transverse direction decreases in the case where the hydrogen atmosphere is not introduced.

The aforementioned experiment revealed that the flattening annealing temperature and the hydrogen partial pressure in the flattening annealing atmosphere influenced the iron loss (W_{17/50}) in the rolling direction, the iron loss degradation (ΔW) upon measuring roll rolling reduction, the iron loss (TD-W₁₀) in the transverse direction, and the magnetizing force (TD-H₁₀) in the transverse direction. We then studied their correlations.

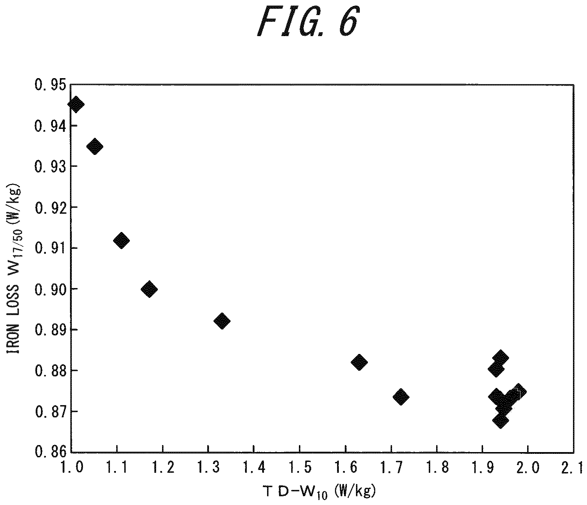

FIG. 6 illustrates the result of studying the relationship between the iron loss (TD-W₁₀) in the transverse direction and the iron loss (W_{17/50}) in the rolling direction.

As illustrated in FIG. 6, when the iron loss in the transverse direction increases, the iron loss in the rolling direction decreases. Setting the iron loss (TD-W₁₀) in the transverse direction to 1.6 W/kg or more is effective in improving the iron loss (W_{17/50}) in the rolling direction. As illustrated in FIG. 4A, the iron loss in the transverse direction increases with an increase in flattening annealing temperature. In the case where there is residual strain by shape adjustment, the stability of the 180° magnetic domain structure decreases, which is likely to cause an increase in iron loss in the transverse direction.

In other words, the iron loss in the transverse direction serves as an index of residual strain.

The results in FIGS. 6 and 4A indicate that, to improve the iron loss in the rolling direction, the flattening annealing temperature needs to be 830 °C or more so that the iron loss in the transverse direction is 1.6 W/kg or more.

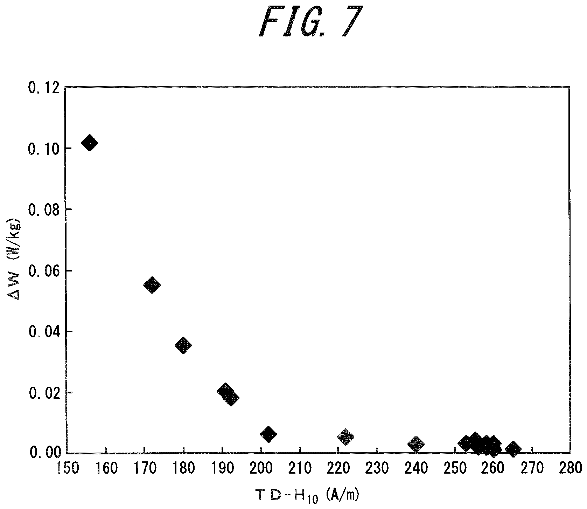

FIG. 7 illustrates the relationship between the magnetizing force (TD-H₁₀) in the transverse direction and the iron loss degradation (ΔW) in the rolling direction.

As illustrated in FIG. 7, when the magnetizing force in the transverse direction increases, the iron loss degradation (ΔW) upon measuring roll rolling reduction decreases. The magnetizing force in the transverse direction increases by increasing the flattening annealing temperature and introducing the hydrogen atmosphere, as illustrated in FIGS. 5A and 5B.

In other words, the magnetizing force in the transverse direction serves as an index of film tension.

The results in FIGS. 7 and 5A and 5B indicate that, to limit the iron loss degradation (ΔW) upon measuring roll rolling reduction to a low level of 0.01 W/kg or less, the flattening annealing temperature needs to be 810 °C or more and preferably 830 °C or more and 0.30% or more hydrogen needs to be introduced into the flattening annealing atmosphere so that the magnetizing force (TD-H₁₀) in the transverse direction is 200 A/m or more.

It is assumed that, by increasing the flattening annealing temperature and introducing the hydrogen atmosphere, the water content in the coating mainly composed of phosphate is reduced to strengthen the coating film tension.

The disclosure is based on the results of the two experiments described above and further studies.

In detail, we provide the following:
1. A grain-oriented electrical steel sheet having a composition containing, in mass%, C: 0.005% or less, Si: 2.0% to 4.5%, and Mn: 0.5% or less, containing each of S, Se, and O: less than 50 ppm, N: less than 60 ppm, and sol.Al: less than 100 ppm, and also containing Sb and P in respective ranges satisfying 0.01% ≤ [%Sb] ≤ 0.20% and 0.02% ≤ [%P] ≤ 2.0 × [%Sb], and further optionally containing, in mass%, one or more selected from Ni: 0.005% to 1.50%, Sn: 0.03% to 0.20%, Cu: 0.02% to 0.50%, Cr: 0.02% to 0.50%, Mo: 0.01% to 0.50%, and Nb: 0.002% to 0.01%, with a balance being Fe and incidental impurities,
   wherein when the steel sheet is excited to 1.0 T at 50 Hz in a rolling transverse direction, a magnetizing force (TD-H₁₀) and an iron loss (TD-W₁₀) are respectively (TD-H₁₀) ≥ 200 A/m and (TD-W₁₀) ≥ 1.60 W/kg, and the grain-oriented electrical steel sheet has a magnetic flux density Bg of 1.94 T or more, an iron loss W_{17/50} of 0.82 W/kg or less, and a strain sensitivity ΔW of 0.005 W/kg or less.
2. A method for producing a grain-oriented electrical steel sheet which, if excited to 1.0 T at 50 Hz in a rolling transverse direction, a magnetizing force (TD-H₁₀) and an iron loss (TD-W₁₀) are respectively (TD-H₁₀) ≥ 200 A/m and (TD-W₁₀) ≥ 1.60 W/kg, the method comprising:
   providing a steel slab having a composition containing, in mass%, C: 0.08% or less, Si: 2.0% to 4.5%, and Mn: 0.5% or less, containing each of S, Se, and O: less than 50 ppm, N: less than 60 ppm, and sol.Al: less than 100 ppm, and also containing Sb and P in respective ranges satisfying 0.01% ≤ [%Sb] ≤ 0.20% and 0.02% ≤ [%P] ≤ 2.0 × [%Sb], and further optionally containing, in mass%, one or more selected from Ni: 0.005% to 1.50%, Sn: 0.03% to 0.20%, Cu: 0.02% to 0.50%, Cr: 0.02% to 0.50%, Mo: 0.01% to 0.50%, and Nb: 0.002% to 0.01%, with a balance being Fe and incidental impurities;
   optionally reheating the steel slab at a temperature of about 1000 °C or more and 1300 °C or less;
   thereafter hot rolling the steel slab to obtain a hot rolled sheet;
   optionally hot band annealing the hot rolled sheet;
   thereafter cold rolling the hot rolled sheet either once, or twice or more with intermediate annealing performed therebetween, to obtain a cold rolled sheet having a final sheet thickness;
   thereafter performing decarburization and primary recrystallization annealing on the cold rolled sheet at a temperature of about 800 °C or more and less than about 950 °C, to obtain a decarburization and primary recrystallization annealed sheet;
   thereafter applying an annealing separator mainly composed of MgO to the decarburization and primary recrystallization annealed sheet;
   thereafter performing secondary recrystallization annealing on the decarburization and primary recrystallization annealed sheet by diffusing S into the steel substrate with a heating rate of 30 °C/h or less under an atmosphere of any of N₂, Ar, and mixed gas thereof, to obtain a secondary recrystallization annealed sheet,
   applying an insulating coating to the secondary recrystallization annealed sheet and baking; and
   further performing flattening annealing on the secondary recrystallization annealed sheet,
   wherein 2.0 mass% to 15.0 mass% magnesium sulfate is contained in the annealing separator,
   the flattening annealing is performed at a temperature of 830 °C or more in an atmosphere having a H₂ partial pressure of 0.3% or more.

### (Advantageous Effect)

It is thus possible to produce a grain-oriented electrical steel sheet having excellent transformer core loss industrially stably at low cost, which is of great industrial value.

### BRIEF DESCRIPTION OF THE DRAWINGS

In the accompanying drawings:
FIG. 1 is a graph illustrating the relationship between the additive amount of P, the additive amount of Sb, and the magnetic flux density;
FIG. 2A is a graph illustrating the influence of the flattening annealing temperature on the iron loss (W_{17/50}) in the rolling direction;
FIG. 2B is a graph illustrating the influence of the H₂ partial pressure in the annealing atmosphere on the iron loss (W_{17/50}) in the rolling direction;
FIG. 3A is a graph illustrating the influence of the flattening annealing temperature on the iron loss degradation (ΔW) upon measuring roll rolling reduction;
FIG. 3B is a graph illustrating the influence of the H₂ partial pressure in the annealing atmosphere on the iron loss degradation (ΔW) upon measuring roll rolling reduction;
FIG. 4A is a graph illustrating the influence of the flattening annealing temperature on the iron loss (TD-W₁₀) in the transverse direction;
FIG. 4B is a graph illustrating the influence of the H₂ partial pressure in the annealing atmosphere on the iron loss (TD-W₁₀) in the transverse direction;
FIG. 5A is a graph illustrating the influence of the flattening annealing temperature on the magnetizing force (TD-H₁₀) in the transverse direction;
FIG. 5B is a graph illustrating the influence of the H₂ partial pressure in the annealing atmosphere on the magnetizing force (TD-H₁₀) in the transverse direction;
FIG. 6 is a graph illustrating the relationship between the iron loss (TD-W₁₀) in the transverse direction and the iron loss (W_{17/50}) in the rolling direction; and
FIG. 7 is a graph illustrating the relationship between the magnetizing force (TD-H₁₀) in the transverse direction and the iron loss degradation (ΔW) in the rolling direction.

### DETAILED DESCRIPTION

One of the disclosed embodiments is described in detail below.

The reasons for limiting the chemical composition of a steel slab to the aforementioned range in this embodiment are described first.

### C: 0.08% or less

C is an element useful in improving primary recrystallized texture. If the C content is more than 0.08%, however, the primary recrystallized texture degrades. The C content is therefore limited to 0.08% or less. The C content is desirably in the range of 0.01% to 0.06%, in terms of magnetic property. In the case where the required level of magnetic property is not so high, the C content may be 0.01% or less in order to omit or simplify decarburization in primary recrystallization annealing.

Moreover, it is essential to reduce the C content to 0.005% or less in the steel sheet after final annealing, in order to prevent magnetic aging.

### Si: 2.0% to 4.5%

Si is an element useful in improving iron loss by increasing electrical resistance, and so the Si content is 2.0% or more. If the Si content is more than 4.5%, however, cold rolling manufacturability decreases significantly. The upper limit of the Si content is therefore 4.5%.

### Mn: 0.5% or less

Mn has an effect of improving hot workability during manufacture. If the Mn content is more than 0.5%, however, the primary recrystallized texture deteriorates and leads to lower magnetic property. The Mn content is therefore limited to 0.5% or less. The lower limit of the Mn content is preferably 0.05%.

### S, Se, and O: less than 50 ppm each

If the content of each of S, Se, and O is 50 ppm or more, secondary recrystallization is difficult. This is because a coarse oxide or MnS or MnSe coarsened due to slab heating makes the primary recrystallized texture non-uniform. The content of each of S, Se, and O is therefore limited to less than 50 ppm.

### N: less than 60 ppm

Excessive N also makes secondary recrystallization difficult, as with S, Se, and O. Particularly if the N content is 60 ppm or more, secondary recrystallization is unlikely to occur, and the magnetic property degrades. The N content is therefore limited to less than 60 ppm.

### sol.Al: less than 100 ppm

Excessive Al also makes secondary recrystallization difficult. Particularly if the sol.Al content is 100 ppm or more, secondary recrystallization is unlikely to occur under the low-temperature slab heating condition, and the magnetic property degrades. Al is therefore limited to less than 100 ppm in sol.Al content.

### Sb and P: 0.01% ≤ [%Sb] ≤ 0.20% and 0.02% ≤ [%P] ≤ 2.0 × [%Sb] respectively

In this embodiment, it is important to contain Sb and P in combination in these respective ranges. By adding Sb and P in combination in these ranges, the desired sulfurization effect in this embodiment is effectively achieved, and magnetic property degradation due to surface oxidation is suppressed. As a result, favorable magnetic property and base film property can be obtained throughout the coil length. If the Sb content or the P content is less than the aforementioned range, the effect cannot be achieved. If the Sb content or the P content is more than the aforementioned range, not only the magnetic property degrades, but also the formation of the base film is difficult.

While the essential components have been described above, the following elements may be contained as appropriate as components for improving the magnetic property industrially more stably in this embodiment.

### Ni: 0.005% to 1.50%

Ni has a function of improving the magnetic property by enhancing the uniformity of the hot rolled sheet texture. To do so, the Ni content is preferably 0.005% or more. If the Ni content is more than 1.50%, secondary recrystallization is difficult, and the magnetic property degrades. Accordingly, the Ni content is desirably in the range of 0.005% to 1.50%.

### Sn: 0.03% to 0.20%

Sn has a function of suppressing the nitriding or oxidation of the steel sheet during secondary recrystallization annealing and promoting the secondary recrystallization of crystal grains having favorable crystal orientation to effectively improve the magnetic property, in particular the iron loss property. To do so, the Sn content is preferably 0.03% or more. If the Sn content is more than 0.20%, cold rolling manufacturability decreases. Accordingly, the Sn content is desirably in the range of 0.03% to 0.20%.

### Cu: 0.02% to 0.50%

Cu is a useful element that suppresses the nitriding or oxidation of the steel sheet during secondary recrystallization annealing and promotes the secondary recrystallization of crystal grains having favorable crystal orientation to effectively improve the magnetic property. To do so, the Cu content is preferably 0.02% or more. If the Cu content is more than 0.50%, cold rolling manufacturability decreases. Accordingly, the Cu content is desirably in the range of 0.02% to 0.50%.

### Cr: 0.02% to 0.50%

Cr has a function of stabilizing the formation of the forsterite base film. To do so, the Cr content is preferably 0.02% or more. If the Cr content is more than 0.50%, secondary recrystallization is difficult, and the magnetic property degrades. Accordingly, the Cr content is desirably in the range of 0.02% to 0.50%.

### Mo: 0.01% to 0.50%

Mo has a function of suppressing high-temperature oxidation and reducing surface defects called scab. To do so, the Mo content is preferably 0.01% or more. If the Mo content is more than 0.50%, cold rolling manufacturability decreases. Accordingly, the Mo content is desirably in the range of 0.01% to 0.50%.

### Nb: 0.002% to 0.01%

Nb is a useful element that inhibits the growth of primary recrystallized grains and promotes the secondary recrystallization of crystal grains having favorable crystal orientation to improve the magnetic property. To do so, the Nb content is desirably 0.002% or more. If the Nb content is more than 0.01%, Nb remains in the steel substrate and degrades the iron loss. Accordingly, the Nb content is desirably in the range of 0.002% to 0.01%.

The following describes a production method in this embodiment.

A steel slab adjusted to the aforementioned chemical composition range is, after or without being reheated, hot rolled. In the case of reheating the slab, the reheating temperature is about 1000 °C or more and 1300 °C or less. Slab heating exceeding 1300 °C is meaningless in this embodiment in which the slab contains no inhibitor, and not only causes an increase in cost but also significantly degrades the magnetic property due to the growth of giant crystal grains. If the reheating temperature is less than 1000 °C, the rolling load increases, making the rolling difficult.

Following this, the hot rolled sheet is optionally hot band annealed. The hot rolled sheet is then cold rolled once, or twice or more with intermediate annealing therebetween, to obtain a final cold rolled sheet. The cold rolling may be performed at normal temperature. Alternatively, the cold rolling may be warm rolling with the steel sheet temperature being higher than normal temperature, e.g. about 250 °C.

The final cold rolled sheet is then subjected to decarburization/primary recrystallization annealing. A first objective of the decarburization/primary recrystallization annealing is to cause the primary recrystallization of the cold rolled sheet having rolled microstructure to adjust it to an optimal primary recrystallized texture for secondary recrystallization. For this objective, the annealing temperature in the primary recrystallization annealing is about 800 °C or more and less than about 950 °C. The annealing atmosphere is desirably a wet hydrogen nitrogen atmosphere or a wet hydrogen argon atmosphere.

A second objective is decarburization. If more than 0.005% carbon is contained in the product sheet, the iron loss degrades. The carbon content is therefore reduced to 0.005% or less.

A third objective is to form a subscale made up of an internal oxidation layer of SiO₂ which is the raw material of the base film mainly composed of forsterite. If the upstream-stage temperature of decarburization annealing is less than 800 °C, oxidation reaction and decarburization reaction do not progress sufficiently, and necessary oxidation and decarburization cannot be completed.

After the decarburization/primary recrystallization annealing, an annealing separator mainly composed of magnesia (MgO) is applied to the surface of the steel sheet. Here, magnesium sulfate is added to the annealing separator mainly composed of MgO, in order to improve the magnetic property by the sulfurization treatment of increasing the amount of S in the steel substrate after the primary recrystallization annealing and before the completion of secondary recrystallization.

If the additive amount of magnesium sulfate is less than 2.0%, the magnetic property improving effect is insufficient. If the additive amount of magnesium sulfate is more than 15.0%, the grain growth is suppressed excessively, and the magnetic property improving effect is insufficient and also the formation of the base film is adversely affected.

The expression "mainly composed of magnesia" in this embodiment means that 50% or more magnesia is contained in the annealing separator. Sub-components such as Na₂S₂O₃ and TiO₂ may be added to the annealing separator in small amounts, according to conventional methods.

After this, secondary recrystallization annealing is performed. During the secondary recrystallization annealing, magnesium sulfate decomposes and exerts the sulfurization effect, thus realizing crystal texture highly aligned with the Goss orientation. Favorable magnetic property can be obtained in this way.

The secondary recrystallization annealing is effectively performed by diffusing S into the steel substrate with a heating rate of 30 °C/h or less, as disclosed in JP 4321120 B. The annealing atmosphere is any of N₂, Ar, and mixed gas thereof. Here, H₂ is not used as atmosphere gas until the completion of secondary recrystallization. This is because S in the annealing separator goes out of the system as H₂S (gas), causing lower sulfurization effect especially in the coil edges.

After the secondary recrystallization annealing, an insulating coating is further applied to the surface of the steel sheet and baked. The type of the insulating coating is not particularly limited, and may be any conventionally well-known insulating coating. For example, a method of applying an application liquid containing phosphate-chromate-colloidal silica described in JP S50-79442 A and JP S48-39338 A to the steel sheet and baking it to also perform flattening annealing is preferable.

Flattening annealing is then performed. This flattening annealing is important in this embodiment.

The flattening annealing temperature needs to be 830 °C or more. If the flattening annealing temperature is less than 830 °C, strain for shape adjustment remains, which decreases the iron loss in the TD direction and simultaneously degrades the iron loss in the RD direction. The iron loss in the TD direction for preventing degradation in the iron loss in the RD direction in the product sheet is 1.60 W/kg or more.

Moreover, 0.30% or more hydrogen needs to be introduced into the flattening annealing atmosphere. If the hydrogen partial pressure in the atmosphere is less than 0.30%, the coating film tension decreases, and the magnetizing force in the TD direction decreases. This results in higher degradation of transformer core loss due to the application of strain associated with processing into a transformer. To reduce the iron loss degradation caused by the application of strain associated with processing into a transformer and improve the transformer core loss, the magnetizing force when exciting the product sheet to 1.0 T in the TD direction needs to be 200 A/m or more.

### EXAMPLES

### (Example 1)

A continuously cast slab having a composition containing C: 0.03%, Si: 3.5%, Mn: 0.08%, sol.Al: 75 ppm, N: 45 ppm, S: 30 ppm, Se: 1 ppm, O: 9 ppm, P: 0.06%, and Sb: 0.10% with the balance being Fe and incidental impurities was reheated to 1230 °C, and then hot rolled to obtain a hot rolled sheet of 2.5 mm in sheet thickness. The hot rolled sheet was then hot band annealed at 1050 °C for 10 s, and subsequently cold rolled at 200 °C to a sheet thickness of 0.27 mm. The cold rolled sheet was then subjected to primary recrystallization annealing also serving as decarburization at 850 °C for 120 s in an atmosphere of H₂: 55%, N₂: 45%, and dew point: 55 °C, with the heating rate from 500 °C to 700 °C being 20 °C/s. The C content after this annealing was 30 ppm.

A sample was collected from the obtained primary recrystallization annealed sheet, and an annealing separator having MgO as a main ingredient and containing magnesium sulfate in the proportion shown in Table 2 was applied at 12.5 g/m² to the sheet surface and dried. The sample was then subjected to secondary recrystallization annealing under the condition of heating to 800 °C at a heating rate of 15 °C/h, heating from 800 °C to 850 °C at a heating rate of 2.0 °C/h, retaining at 850 °C for 50 h, and then heating to 1160 °C at a heating rate of 5.0 °C/h and soaking for 5 h. As the atmosphere gas, N₂ gas was used up to 850 °C, and H₂ gas was used at 850 °C or more.

A treatment liquid containing phosphate-chromate-colloidal silica at a mass ratio of 3: 1: 3 was applied to the surface of the secondary recrystallization annealed sheet obtained under the aforementioned condition, and subsequently flattening annealing was performed under the condition shown in Table 2.

The magnetic property of the obtained product sheet was then examined. The magnetic property was evaluated based on the magnetic flux density Bg when exciting the sheet at 800 A/m in the rolling direction and the iron loss W_{17/50} when exciting the sheet to 1.7 T at 50 Hz in an alternating magnetic field in the rolling direction, the magnetizing force (TD-H₁₀) and iron loss (TD-W₁₀) when exciting the sheet to 1.0 T at 50 Hz in the transverse direction, and the strain sensitivity.

The strain sensitivity was evaluated based on the change (ΔW) in iron loss W_{17/50} value when passing the sheet while pressing it by measuring rolls, which were made up of steel rolls of 100 mm in diameter and 50 mm in width, with a rolling reduction force of 1.5 MPa (15 kgf/cm).

Table 2 shows the obtained results. Magnetic flux density Bg of 1.94 T or more, iron loss W_{17/50} of 0.82 W/kg or less, and ΔW of 0.005 W/kg or less are regarded as excellent properties.

### [Table 2]

**Table 2**

| No. | Additive amount of magnesium sulfate (%) | Flattening annealing condition | | Magnetic property of product sheet | | | | | Remarks |
|---|---|---|---|---|---|---|---|---|---|
| | | Soaking temperature (°C) | H₂ partial pressure in atmosphere (%) | B₈ (T) | W_{17/50} (W/kg) | TD-H₁₀ (A/m) | TD-W₁₀ (W/kg) | ΔW (W/kg) | |
| 1 | 2.5 | 850 | 3.0 | 1.943 | 0.812 | 271 | 1.903 | 0.005 | Example |
| 2 | 5.0 | 850 | 3.0 | 1.955 | 0.784 | 280 | 1.993 | 0.004 | Example |
| 3 | 10.0 | 850 | 3.0 | 1.960 | 0.775 | 290 | 2.011 | 0.003 | Example |
| 4 | 10.0 | 880 | 3.0 | 1.957 | 0.763 | 272 | 2.028 | 0.004 | Example |
| 5 | 0 | 850 | 3.0 | 1.911 | 0.880 | 188 | 1.774 | 0.023 | Comparative Example |
| 6 | 20.0 | 850 | 3.0 | 1.868 | 1.050 | 292 | 2.044 | 0.003 | Comparative Example |
| 7 | 5.0 | 800 | 3.0 | 1.953 | 0.883 | 280 | 1.503 | 0.004 | Comparative Example |
| 8 | 5.0 | 850 | 0 | 1.956 | 0.788 | 180 | 1.983 | 0.028 | Comparative Example |

As is clear from Table 2, by using the material containing P and Sb in combination, applying the annealing separator mainly composed of MgO and containing 2.0% or more magnesium sulfate, and performing secondary recrystallization annealing according to the disclosure, favorable magnetic flux density was obtained. Moreover, by setting the flattening annealing temperature to 830 °C or more, the iron loss in the TD direction was 1.60 W/kg or more, resulting in favorable iron loss in the rolling direction. Further, by introducing 0.30% or more a hydrogen atmosphere into the flattening annealing atmosphere, the magnetizing force when exciting the sheet to 1.0 T in the transverse direction was ensured to be 200 A/m or more, as a result of which the iron loss degradation caused by the application of strain associated with processing into a transformer was reduced.

### (Example 2)

A continuously cast slab composed of various components shown in Table 3 was reheated to 1230 °C, and then hot rolled to obtain a hot rolled sheet of 2.2 mm in sheet thickness. The hot rolled sheet was then hot band annealed at 1050 °C for 10 s, and subsequently cold rolled at 200 °C to a sheet thickness of 0.23 mm. The cold rolled sheet was then subjected to decarburization annealing at 850 °C for 120 s in an atmosphere of H₂: 55%, N₂: 45%, and dew point: 55 °C, with the heating rate from 500 °C to 700 °C being 20 °C/s. The C content after the decarburization annealing was 30 ppm.

A sample was collected from the decarburization annealed sheet, and an annealing separator having MgO as a main ingredient and containing magnesium sulfate in the proportion shown in Table 4 was applied at 12.5 g/m² to the sheet surface and dried. The sample was then subjected to secondary recrystallization annealing under the condition of heating to 800 °C at a heating rate of 15 °C/h, heating from 800 °C to 850 °C at a heating rate of 2.0 °C/h, retaining at 850 °C for 50 h, and then heating to 1160 °C at a heating rate of 5.0 °C/h and soaking for 5 h. As the atmosphere gas, N₂ gas was used up to 850 °C, and H₂ gas was used at 850 °C or more.

A treatment liquid containing phosphate-chromate-colloidal silica at a mass ratio of 3: 1: 3 was applied to the surface of the secondary recrystallization annealed sheet obtained under the aforementioned condition, and subsequently flattening annealing was performed under the condition shown in Table 4.

The magnetic property of the obtained product sheet was then examined. The method of evaluating the magnetic property is the same as that in Example 1.

Table 4 shows the obtained results.

### [Table 3]

**Table 3**

| No. | Chemical composition (mass%) | | | | | | | | | | | Remarks |
|---|---|---|---|---|---|---|---|---|---|---|---|---|
| | C | Si | Mn | Sb | P | S | Se | O | Al | N | Others | |
| 1 | 0.03 | 3.3 | 0.07 | 0.052 | 0.055 | 0.001 | 0.001 | 0.001 | 0.003 | 0.003 | - | Conforming steel |
| 2 | 0.04 | 3.2 | 0.08 | 0.066 | 0.075 | 0.002 | 0.001 | 0.001 | 0.004 | 0.002 | Ni: 0.30 | Conforming steel |
| 3 | 0.02 | 3.2 | 0.08 | 0.036 | 0.055 | 0.002 | 0.001 | 0.001 | 0.004 | 0.002 | Sn: 0.10 | Conforming steel |
| 4 | 0.03 | 3.4 | 0.11 | 0.044 | 0.045 | 0.001 | 0.001 | 0.001 | 0.005 | 0.003 | Cu: 0.10 | Conforming steel |
| 5 | 0.04 | 3.3 | 0.06 | 0.078 | 0.077 | 0.002 | 0.001 | 0.001 | 0.006 | 0.001 | Cr: 0.08 | Conforming steel |
| 6 | 0.03 | 3.1 | 0.07 | 0.055 | 0.058 | 0.001 | 0.001 | 0.001 | 0.004 | 0.003 | Mo: 0.1 | Conforming steel |
| 7 | 0.02 | 3.2 | 0.08 | 0.060 | 0.050 | 0.002 | 0.001 | 0.001 | 0.004 | 0.002 | Nb: 0.004 | Conforming steel |
| 8 | 0.03 | 3.5 | 0.05 | 0.001 | 0.001 | 0.002 | 0.001 | 0.001 | 0.007 | 0.003 | - | Comparative steel |
| 9 | 0.04 | 3.3 | 0.06 | 0.001 | 0.050 | 0.002 | 0.001 | 0.001 | 0.006 | 0.001 | - | Comparative steel |
| 10 | 0.04 | 3.3 | 0.06 | 0.053 | 0.001 | 0.002 | 0.001 | 0.001 | 0.006 | 0.001 | - | Comparative steel |
| 11 | 0.04 | 3.3 | 0.07 | 0.064 | 0.041 | 0.001 | 0.024 | 0.001 | 0.003 | 0.003 | - | Comparative steel |
| 12 | 0.03 | 3.4 | 0.06 | 0.045 | 0.068 | 0.021 | 0.001 | 0.011 | 0.003 | 0.003 | - | Comparative steel |
| 13 | 0.02 | 3.2 | 0.07 | 0.035 | 0.050 | 0.001 | 0.001 | 0.001 | 0.023 | 0.003 | - | Comparative steel |
| 14 | 0.03 | 3.3 | 0.09 | 0.045 | 0.049 | 0.002 | 0.001 | 0.001 | 0.003 | 0.008 | - | Comparative steel |

### [Table 4]

**Table 4**

| No. | Additive amount of magnesium sulfate (%) | Magnetic property of product sheet | | | | | Remarks |
|---|---|---|---|---|---|---|---|
| | | B₈ (T) | W_{17/50} (W/kg) | TD-H₁₀ (A/m) | TD-W₁₀ (W/kg) | ΔW (W/kg) | |
| 1 | 3 | 1.949 | 0.81 | 282 | 2.003 | 0.004 | Example |
| 2 | 10 | 1.960 | 0.80 | 278 | 1.922 | 0.005 | Example |
| 3 | 5 | 1.950 | 0.77 | 285 | 2.022 | 0.003 | Example |
| 4 | 5 | 1.954 | 0.78 | 288 | 2.101 | 0.002 | Example |
| 5 | 3 | 1.950 | 0.79 | 286 | 2.076 | 0.003 | Example |
| 6 | 3 | 1.950 | 0.78 | 278 | 1.983 | 0.005 | Example |
| 7 | 10 | 1.960 | 0.78 | 281 | 2.000 | 0.004 | Example |
| 8 | 0 | 1.909 | 0.90 | 220 | 1.703 | 0.008 | Comparative Example |
| 9 | 0 | 1.951 | 0.89 | 188 | 1.783 | 0.030 | Comparative Example |
| 10 | 0 | 1.905 | 0.93 | 238 | 1.803 | 0.010 | Comparative Example |
| 11 | 0 | 1.830 | 1.45 | 160 | 1.432 | 0.045 | Comparative Example |
| 12 | 0 | 1.802 | 1.77 | 145 | 1.382 | 0.059 | Comparative Example |
| 13 | 0 | 1.804 | 1.72 | 138 | 1.432 | 0.055 | Comparative Example |
| 14 | 0 | 1.811 | 1.62 | 165 | 1.543 | 0.044 | Comparative Example |

As is clear from Table 4, by using the material containing appropriate amounts of P and Sb in combination, applying the annealing separator having MgO as a main ingredient and containing 2.0% or more magnesium sulfate, performing secondary recrystallization annealing, and further applying an appropriate flattening annealing condition according to the disclosure, not only favorable magnetic flux density was obtained, but also iron loss degradation caused by the application of strain associated with processing into a transformer was reduced.

## Claims

1. A grain-oriented electrical steel sheet having a composition containing, in mass%, C: 0.005% or less, Si: 2.0% to 4.5%, and Mn: 0.5% or less, containing each of S, Se, and O: less than 50 ppm, N: less than 60 ppm, and sol.Al: less than 100 ppm, and also containing Sb and P in respective ranges satisfying 0.01% ≤ [%Sb] ≤ 0.20% and 0.02% ≤ [%P] ≤ 2.0 × [%Sb], and further optionally containing, in mass%, one or more selected from Ni: 0.005% to 1.50%, Sn: 0.03% to 0.20%, Cu: 0.02% to 0.50%, Cr: 0.02% to 0.50%, Mo: 0.01% to 0.50%, and Nb: 0.002% to 0.01%, with a balance being Fe and incidental impurities,
wherein when the steel sheet is excited to 1.0 T at 50 Hz in a rolling transverse direction, a magnetizing force (TD-H₁₀) and an iron loss (TD-W₁₀) are respectively (TD-H₁₀) ≥ 200 A/m and (TD-W₁₀) ≥ 1.60 W/kg, and the grain-oriented electrical steel sheet has a magnetic flux density B₈ of 1.94 T or more, an iron loss W_{17/50} of 0.82 W/kg or less, and a strain sensitivity ΔW of 0.005 W/kg or less.

2. A method for producing a grain-oriented electrical steel sheet which, if excited to 1.0 T at 50 Hz in a rolling transverse direction, a magnetizing force (TD-H₁₀) and an iron loss (TD-W₁₀) are respectively (TD-H₁₀) ≥ 200 A/m and (TD-W₁₀) ≥ 1.60 W/kg, the method comprising:
providing a steel slab having a composition containing, in mass%, C: 0.08% or less, Si: 2.0% to 4.5%, and Mn: 0.5% or less, containing each of S, Se, and O: less than 50 ppm, N: less than 60 ppm, and sol.Al: less than 100 ppm, and also containing Sb and P in respective ranges satisfying 0.01% ≤ [%Sb] ≤ 0.20% and 0.02% ≤ [%P] ≤ 2.0 × [%Sb], and further optionally containing, in mass%, one or more selected from Ni: 0.005% to 1.50%, Sn: 0.03% to 0.20%, Cu: 0.02% to 0.50%, Cr: 0.02% to 0.50%, Mo: 0.01% to 0.50%, and Nb: 0.002% to 0.01%, with a balance being Fe and incidental impurities;
optionally reheating the steel slab at a temperature of about 1000 °C or more and 1300 °C or less;
thereafter hot rolling the steel slab to obtain a hot rolled sheet;
optionally hot band annealing the hot rolled sheet;
thereafter cold rolling the hot rolled sheet either once, or twice or more with intermediate annealing performed therebetween, to obtain a cold rolled sheet having a final sheet thickness;
thereafter performing decarburization and primary recrystallization annealing on the cold rolled sheet at a temperature of about 800 °C or more and less than about 950 °C, to obtain a decarburization and primary recrystallization annealed sheet;
thereafter applying an annealing separator mainly composed of MgO to the decarburization and primary recrystallization annealed sheet;
thereafter performing secondary recrystallization annealing on the decarburization and primary recrystallization annealed sheet by diffusing S into the steel substrate with a heating rate of 30 °C/h or less under an atmosphere of any of N₂, Ar, and mixed gas thereof, to obtain a secondary recrystallization annealed sheet,
applying an insulating coating to the secondary recrystallization annealed sheet and baking; and
further performing flattening annealing on the secondary recrystallization annealed sheet,
wherein 2.0 mass% to 15.0 mass% magnesium sulfate is contained in the annealing separator,
the flattening annealing is performed at a temperature of 830 °C or more in an atmosphere having a H₂ partial pressure of 0.3% or more.

## Patentansprüche

1. Kornorientiertes Elektrostahlblech, das eine Zusammensetzung hat, die in Masse-% enthält: C: 0,005 % oder weniger, Si: 2,0 % bis 4,5 %, und Mn: 0,5 % oder weniger, das S, Se und O enthält: weniger als 50 ppm, N: weniger als 60 ppm, und sol.A1: weniger als 100 ppm, enthaltend auch Sb und P in entsprechenden Bereichen, die 0,01 % ≤ [%Sb] ≤ 0,20 % und 0,02 % ≤ [%P] ≤ 2,0 x [%Sb] erfüllen, und optional ferner in Masse-% enthaltend, ein oder mehrere Elemente, ausgewählt aus Ni: 0,005 % bis 1,50 %, Sn: 0,03 % bis 0,20 %, Cu: 0,02 % bis 0,50 %, Cr: 0,02 % bis 0,50 %, Mo: 0,01 % bis 0,50 %, und Nb: 0,002 % bis 0,01 %, wobei der Restbetrag aus Fe und zufälligen Verunreinigungen besteht,
wobei, wenn das Stahlblech bis 1,0 T bei 50 Hz in einer quer rollenden Richtung angeregt wird, eine Magnetisierungskraft (TD-H₁₀) und ein Eisenverlust (TD-W₁₀) je (TD-H₁₀) ≥ 200 A/m bzw. (TD-W₁₀) ≥ 1,60 W/kg betragen, und das kornorientierte Elektrostahlblech eine Magnetflussdichte B₈ von 1,94 T oder mehr, einen Eisenverlust W_{17/50} von 0,82 W/kg oder weniger und eine Formänderungsempfindlichkeit ΔW von 0,005 W/kg oder weniger hat.

2. Verfahren zum Herstellen eines kornorientierten Elektrostahlblechs, das bei Anregung mit 1.0 T bei 50 Hz in einer quer rollenden Richtung eine Magnetisierungskraft (TD-H₁₀) und einen Eisenverlust (TD-W₁₀) von (TD-H₁₀) ≥ 200 A/m bzw. (TD-W₁₀) ≥ 1,60 W/kg hat, wobei das Verfahren umfasst:
Bereitstellen eines Stahlbarrens, der eine Zusammensetzung hat, die in Masse-% enthält C: 0,08 % oder weniger, Si: 2,0 % bis 4,5 %, und Mn: 0,5 % oder weniger, der S, Se und O enthält: weniger als 50 ppm, N: weniger als 60 ppm, und sol.A1: weniger als 100 ppm, enthaltend auch Sb und P in entsprechenden Bereichen, die 0,01 % ≤ [%Sb] ≤ 0,20 % und 0,02 % ≤ [%P] ≤ 2,0 x [%Sb] erfüllen, und enthaltend optional in Masse-% ein oder mehr Elemente, ausgewählt aus Ni: 0,005 % bis 1,50 %, Sn: 0,03 % bis 0,20 %, Cu: 0,02 % bis 0,50 %, Cr: 0,02 % bis 0,50 %, Mo: 0,01 % bis 0,50 %, und Nb: 0,002 % bis 0,01 %, wobei der Restbetrag Fe und zufällige Verunreinigungen sind;
optional Tempern des Stahlbarrens bei einer Temperatur von etwa 1000 °C oder mehr und 1300 °C oder weniger;
danach Warmwalzen des Stahlbarrens, um ein warmgewalztes Blech zu erhalten;
optional Warmbandglühen des warmgewalzten Blechs;
danach Kaltwalzen des warmgewalzten Blechs, entweder einmal oder zweimal oder mehr mit Zwischenglühen, das dazwischen ausgeführt wird, um ein kaltgewalztes Blech zu erhalten, das eine endgültige Blechdicke hat;
danach Ausführen der Entkohlung und des primären Rekristallisationsglühens am kaltgewalzten Blech bei einer Temperatur von etwa 800 °C oder mehr und weniger als etwa 950 °C, um eine Entkohlung zu erreichen und ein Blech nach primärem Rekristallisationsglühen zu erhalten;
danach Anwenden eines Glühseparators, der hauptsächlich aus MgO besteht, auf die Entkohlung und das zur primären Rekristallisation geglühte Blech;
danach Ausführen des sekundären Rekristallisationsglühens auf dem zur Entkohlung und primären Rekristallisation geglühten Blech durch Diffusion von S in das Stahlsubstrat mit einer Heizrate von 30 °C/h oder weniger unter einer Atmosphäre von N₂, Ar und einer Gasmischung derselben, um ein zur sekundären Rekristallisation geglühtes Blech zu erhalten,
Auftragen einer Isolierbeschichtung auf das zur sekundären Rekristallisation geglühte Blech und Brennen; und
ferner Ausführen des Glättungsglühens an dem zur sekundären Rekristallisation geglühten Blech,
wobei 2,0 Masse-% bis 15,0 Masse-% Magnesiumsulfat im Glühseparator enthalten sind, und
das Glättungsglühen bei einer Temperatur von 830 °C oder mehr in einer Atmosphäre ausgeführt wird, die einen H₂-Partialdruck von 0,3 % oder mehr hat.

## Revendications

1. Tôle d'acier électrique à grains orientés ayant une composition contenant, en % en masse, C : 0,005 % ou moins, Si : 2,0 % à 4,5 %, et Mn : 0,5 % ou moins, contenant chacun de S, Se et O : moins de 50 ppm, N : moins de 60 ppm, et sol.A1 : moins de 100 ppm, et contenant également Sb et P dans des plages respectives satisfaisant à 0,01 % ≤ [% de Sb] ≤ 0,20 % et 0,02 % ≤ [% de P] ≤ 2,0 x [% de Sb], et contenant en outre facultativement, en % en masse, un ou plusieurs choisis parmi Ni : 0,005 % à 1,50 %, Sn : 0,03 % à 0,20 %, Cu : 0,02 % à 0,50 %, Cr : 0,02 % à 0,50 %, Mo : 0,01 % à 0,50 %, et Nb : 0,002 % à 0,01 %, le reste étant du Fe et des impuretés accidentelles,
dans lequel lorsque la tôle d'acier est excitée jusqu'à 1,0 T à 50 Hz dans une direction transversale au laminage, une force de magnétisation (TD-H₁₀) et une perte de fer (TD-W₁₀) sont respectivement (TD-H₁₀) ≥ 200 A/m et (TD-W₁₀) ≥ 1,60 W/kg, et la tôle d'acier électrique à grains orientés a une densité de flux magnétique B₈ de 1,94 T ou plus, une perte en fer W_{17/50} de 0,82 W/kg ou moins, et une sensibilité à la déformation ΔW de 0,005 W/kg ou moins.

2. Procédé de production d'une tôle d'acier électrique à grains orientés où, si elle est excitée jusqu'à 1,0 T à 50 Hz dans une direction transversale au laminage, une force de magnétisation (TD-H₁₀) et une perte de fer (TD-W₁₀) sont respectivement (TD-H₁₀) ≥ 200 A/m et (TD-W₁₀) ≥ 1,60 W/kg, le procédé comprenant les étapes consistant à :
fournir une brame d'acier ayant un composite₁₀n contenant, en % en masse, C : 0,08 % ou moins, Si : 2,0 % à 4,5 % et Mn : 0,5 % ou moins, contenant chacun de S, Se et O : moins de 50 ppm, N : moins de 60 ppm, et sol.A1 : moins de 100 ppm, et contenant également Sb et P dans des plages respectives satisfaisant à 0,01 % ≤ [% de Sb] ≤ 0,20 % et 0,02 % ≤ [% de P] ≤ 2,0 x [% de Sb], et contenant en outre facultativement, en % masse, un ou plusieurs choisis parmi Ni : 0,005 % à 1,50 %, Sn : 0,03 % à 0,20 %, Cu : 0,02 % à 0,50 %, Cr : 0,02 % à 0,50 %, Mo : 0,01 % à 0,50 % et Nb : 0,002 % à 0,01 %, le reste étant du Fe et des impuretés accidentelles ;
facultativement réchauffer la brame d'acier à une température d'environ 1 000°C ou plus et 1 300°C ou moins ;
ensuite laminer à chaud la brame d'acier pour obtenir une tôle laminée à chaud ;
facultativement recuire en bande chaude la tôle laminée à chaud ;
ensuite laminer à froid la tôle laminée à chaud soit une, soit deux fois ou plus avec un recuit intermédiaire effectué entre chaque fois, pour obtenir une tôle laminée à froid ayant une épaisseur de tôle finale ;
effectuer ensuite un recuit par décarburation et recristallisation primaire sur la tôle laminée à froid à une température d'environ 800°C ou plus et inférieure à environ 950°C, pour obtenir une tôle recuite par décarburation et recristallisation primaire ;
appliquer ensuite un séparateur de recuit principalement composé de MgO à la tôle recuite par décarburation et recristallisation primaire ;
effectuer ensuite un recuit par recristallisation secondaire sur la tôle recuite par décarburation et recristallisation primaire en diffusant du S dans le substrat en acier avec une vitesse de chauffage de 30°C/h ou moins sous une atmosphère de l'un quelconque de N₂, Ar, et d'un gaz mixte de ceux-ci, pour obtenir un tôle recuite par recristallisation secondaire,
appliquer un revêtement isolant sur la tôle recuite par recristallisation secondaire et cuire ; et
effectuer en outre un recuit d'aplatissement sur la tôle recuite par recristallisation secondaire,
dans lequel 2,0 % en masse à 15,0 % en masse de sulfate de magnésium sont contenus dans le séparateur de recuit,
le recuit d'aplatissement est effectué à une température de 830°C ou plus dans une atmosphère ayant une pression partielle de H₂ de 0,3 % ou plus.
